Europäisches Patentamt

European Patent Office

Office européen des brevets

(19)

(11) Veröffentlichungsnummer: **0 075 204 B1**

(12) **EUROPÄISCHE PATENTSCHRIFT**

(45) Veröffentlichungstag der Patentschrift:
10.07.85

(51) Int. Cl.⁴: **G 11 B 5/70**

(21) Anmeldenummer: **82108289.8**

(22) Anmeldetag: **09.09.82**

(54) **Magnetischer Aufzeichnungsträger.**

(30) Priorität: **17.09.81 DE 3136982**

(43) Veröffentlichungstag der Anmeldung:
**30.03.83 Patentblatt 83/13**

(45) Bekanntmachung des Hinweises auf die Patenterteilung:
**10.07.85 Patentblatt 85/28**

(84) Benannte Vertragsstaaten:
**DE FR GB NL**

(56) Entgegenhaltungen:
**DE - A - 1 495 040**

(73) Patentinhaber: **BASF Aktiengesellschaft,
Carl-Bosch-Strasse 38, D-6700 Ludwigshafen (DE)**

(72) Erfinder: **Bachmann, Rudolf, Dr., Winklerstrasse 12,
D-6710 Frankenthal (DE)**
Erfinder: **Balz, Werner, Dr., Carl-Bosch-Strasse 46,
D-6703 Limburgerhof (DE)**
Erfinder: **Grau, Werner, Dr., Tuchbleiche 5,
D-6712 Bobenheim-Roxheim (DE)**
Erfinder: **Gutermann, Winfried, Birkentalstrasse 10,
D-6702 Bad Duerkheim (DE)**
Erfinder: **Kovacs, Jenoe, Dr., Robert-Koch-Strasse 18,
D-6712 Bobenheim-Roxheim (DE)**
Erfinder: **Krucker, Karl, Dr., Frankenstrasse 36,
D-6710 Frankenthal (DE)**
Erfinder: **Rudolf, Peter, Buchenweg 1,
D-6701 Fussgoenheim (DE)**
Erfinder: **Schaefer, Dieter, Dr., Hauptstrasse 173,
D-6731 Lindenberg (DE)**
Erfinder: **Hack, Joachim, Pfarrer-Friedrich-Strasse 34,
D-6700 Ludwigshafen (DE)**

## Beschreibung

Die Erfindung betrifft einen magnetischen Aufzeichnungsträger, bestehend aus einem nichtmagnetischen Trägermaterial und mindestens einer darauf haftfest aufgebrachten Magnetschicht auf der Basis eines in einem organischen polymeren Bindemittel und üblichen Zusatzstoffen feinverteilten anisotropen magnetischen Materials.

Für die Herstellung und den Aufbau der Magnetschichten von magnetischen Aufzeichnungsträgern wurde schon eine Vielzahl polymerer organischer Bindemittel und anderer Zusatzstoffe zum Zwecke der Verbesserung sowohl bei der Bereitung und der Verarbeitungsfähigkeit der die Magnetschicht bildenden Dispersion, als auch zur Verbesserung der elektrischen, elektroakustischen und mechanischen Eigenschaften des Aufzeichnungsträgers beschrieben. So wurden u. a. auch schon als Bindemittel oder als Teile einer Bindemittelmischung Copolymere eingsesetzt, die einen, meist geringen Anteil an N-Vinylpyrrolidon als Comonomeres aufweisen (z. B. DE-OS 1 495 040).

Für die schichtbildenden Bindemittel eines magnetischen Aufzeichnungsträgers sind Polymere erforderlich, die elastische und selbstragende Filme bilden können. Neben einem hohen Pigmentbindevermögen ist für diese filmbildenden Polymere hohe Reißfestigkeit und Dehnung sowie ein hoher Elastizitätsmodul wesentlich. Wegen der mechanischen Beanspruchung müssen die Magnetschichtoberflächen zudem hohe Oberflächenhärte und niedrige Reibungswerte besitzen. Entsprechende hochpolymeren Substanzen erfordern für die Verarbeitung aber einen großen Anteil an Lösungsmittel, wodurch das Bindemittel-Lösungsmittel-Pigmentverhältnis bei der Dispersionsherstellung derart beeinflußt werden kann, daß störende Thixotropie-Erscheinung festzustellen sind. Es wurde deshalb schon vielfach versucht, durch die unterschiedlichsten speziellen Zusätze bei der Dispersionsherstellung die Dispergierbarkeit des magnetischen Materials, die Homogenität und Stabilität der Dispersion, die Vorarbeitkeit bei der Schichtherstellung, die Trocknungseigenschaften und die Oberflächenbildung zu verbessern, um auf diese Weise zu magnetischen Aufzeichnungsträgern zu gelangen, welche nicht nur hinsichtlich der elektroakustischen Eigenschaften sondern vor allem bezüglich des Fehlerverhaltens den gestiegenen Anforderungen genügen.

Aufgabe der vorliegenden Erfindung war es daher, magnetische Aufzeichnungsträger bereitzustellen, deren Magnetschichten sich durch eine besondere Homogenität und durch hervorragende Oberflächen und damit durch eine geringere Anzahl von Fehlstellen und geringe Fehlerzahlen beim Einsatz, insbesondere zur Daten- bzw. Bildaufzeichnung auszeichnen.

Es wurde nun gefunden, daß magnetische Aufzeichnungsträger bestehend aus einem nichtmagnetischen Trägermaterial und mindestens einer darauf haftfest aufgebrachten Magnetschicht auf der Basis eines in einem organischen polymeren Bindemittel und üblichen Zusatzstoffen feinverteilten anisotropen magnetischen Materials, den gestellten Anforderungen in besonderer Weise genügen, wenn die Magnetschicht zusätzlich 0,5 bis 20 Gew.-% bezogen auf die Menge an magnetischen Material, eines Homo- oder Copolymeren des N-Vinylpyrrolidons mit einem Molukulargewicht von unter 60 000 enthält.

Neben den Homopolymeren des N-Vinylpyrrolidons sind dessen Copolymerisate mit Comonomeren, wie Vinylester von Monocarbonsäuren mit 2 bis 9 C-Atomen, Vinylether, Allylalkohol und dessen Ester mit Monocarbonsäuren mit 2 bis 9 C-Atomen, Acrylsäure, Methacrylsäure, Maleinsäure, Acrylnitril oder Styrol für die erfindungsgemäßen magnetischen Aufzeichnungsträger geeignet.

Insbesondere hat sich ein N-Vinylpyrrolidon-Polymer aus 0 bis 50 Gewichtsprozent Vinylacetat oder 0 bis 50 Gewichtsprozent Vinylpropionat oder 0 bis 50 Gewichtsprozent Acrylsäure und 50 bis 100 Gewichtsprozent N-Vinylpyrrolidon als vorteilhaft erwiesen.

Die in den erfindungsgemäßen magnetischen Aufzeichnungsträgern enthaltenden Homo- oder Copolymeren des N-Vinylpyrrolidons gehören zur Klasse der Bindemittel. Sie sind zwar filmbildend, eignen sich jedoch nicht zur Herstellung selbsttragender Schichten. Das Molekulargewicht dieser Polymere ist kleiner als 60 000, bevorzugt kleiner 20 000. Ihre Herstellung durch Polymerisation des N-Vinylpyrrolidons ist allgemeiner Stand der Technik.

Der Anteil der N-Vinylpyrrolidon-Homo- oder Copolymeren in der Magnetschicht der erfindungsgemäßen Aufzeichnungsträger beträgt zwischen 0,5 und 20, insbesondere zwischen 1 und 10 Gew.-%, bezogen auf die Menge an magnetischem Material.

Die Zugabe des in der Magnetschicht enthaltenden N-Vinylpyrrolidon-Polymeren erfolgt entweder in der Endphase des Dispergierens, bei dem das magnetische Material in Kugel- oder Rührwerksmühlen in Gegenwart eines Dispergierhilfsmittels und anderer üblicher Zusätze in der Bindemittellösung fein verteilt wird, oder nach Beendigung des Dispergiervorgangs. Im letztgenannten Fall hat es sich als günstig erwiesen, wenn das zugesetzte N-Vinylpyrrolidon-Polymere mit der Dispersion intensiv vermischt wird.

Die Zusammensetzung und Herstellung der Dispersion der magnetischen Materialien im gelösten Polymerbindemittel für die erfindungsgemäßen magnetischen Aufzeichnungsträger entspricht den an sich üblichen Verfahren.

Als magnetische Materialien werden bevorzugt feinteiliges stäbchenförmiges Gamma-Eisen(III)oxid mit einer durchschnittlichen Teilchengröße von 0,1 bis 2 µm und insbesondere von 0,1 bis 0,9 µm oder stäbchenförmiges Chromdioxid der gleichen Teilchenstruktur, wie beim Eisenoxid ange-

0 075 204

geben, verwendet. Weitere geeignete Materialien sind nadelförmiges Gamma-Eisen(III)oxid mit Dotierungen von Schwermetallen, insbesondere von Kobalt sowie feinteilige Metallegierungen von Eisen, Kobalt und/oder Nickel.

Als Bindemittel für die Dispersion des feinteiligen magnetischen Materials können die für die Herstellung von Magnetschichten bekannten Bindemittel verwendet werden, wie in alkoholischen Lösungsmitteln lösliche Copolyamide, Polyvinylformale, Polyurethanelastomere, Mischungen von Polyisocyanaten und höhermolekularen Polyhydroxylverbindungen und Vinylchlorid-Polymerisate mit über 60% an Vinylchlorid-Molekülbausteinen, z. B. Vinylchlorid-Copolymerisate mit Comonomeren, wie Vinylestern von Monocarbonsäuren mit 2 bis 9 C-Atomen, Estern von aliphatischen Alkoholen bis 1 bis 9 C-Atomen und ethylenisch ungesättigten Carbonsäuren mit 3 bis 5 C-Atomen, wie die Ester der Acrylsäure, Methacrylsäure oder Maleinsäure, oder diesen Carbonsäuren selbst als Comonomere sowie hydroxylgruppenhaltige Vinylchlorid-Copolymerisate, die durch partielle Verseifung von Vinylchlorid-Vinylester-Copolymerisaten oder direkte Copolymerisation von Vinylchlorid mit hydroxylgruppenhaltigen Monomeren, wie Allylalkohol oder 4-Hydroxybutyl- oder 2-Hydroxyethyl-(meth)-acrylat hergestellt werden können. Ferner sind als Bindemittel geeignet Abmischungen von Polyurethanelastomeren mit Polyvinylformalen, Phenoxyharzen und PVC-Copolymerisaten der angegebenen Zusammensetzung. Bevorzugte Bindemittel sind Polyvinylformel-Binder, Polyurethanelastomer-Abmischungen der genannten Art, vor allem mit Polyvinylformalen. Als Polyurethanelastomer-Binder werden handelsübliche elastomere Polyesterurethane aus Adipinsäure, 1,4-Butandiol und 4,4'-Diisocyanatodiphenylmethan bevorzugt angewandt.

Als organische Lösungsmittel eignen sich für die Herstellung der Dispersion die hierfür bekannten organischen Lösungsmittel, insbesondere aromatische Kohlenwasserstoffe, wie Benzol, Toluol oder Xylol, Alkohole, wie Propanol oder Butanol, Ketone, wie Aceton oder Methylethylketon, Ether, wie Tetrahydrofuran oder Dioxan, sowie Gemische solcher Lösungsmittel und andere für Lackbindemittel übliche Lösungsmittel und Lösungsmittelgemische.

Die Dispersionen können weitere Zusatzstoffe zur Herstellung der Magnetschichten, wie Dispergierhilfsmittel, beispielsweise Lecithine, geringe Monocarbonsäureanteile oder Gemische derselben, bei Chromdioxid bevorzugt Zinkoleat, -stearat, -isostearat, sowie Füllstoffe, wie Ruß, Graphit, Quarzmehl und/oder nicht magnetisierbares Pulver auf Silicatbasis und Mittel zur Verbesserung des Verlaufs, wie geringe Mengen Siliconöl, zugesetzt werden. Diese Zusätze sollen zweckmäßigerweise insgesamt 12 Gew.-%, bevorzugt 8 Gew.-%, bezogen auf das Trockengewicht der Magnetschicht, nicht überschreiten.

Die Herstellung der Magnetschichten erfolgt in bekannter Weise. Hierzu wird das magnetische Material mit dem verwendeten Bindemittel und ausreichend Lösungsmittel in einer Dispergiermaschine, z. B. einer Topfkugelmühle oder einer Rührwerkskugelmühle, unter Zusatz eines Dispergiermittels und gegebenenfalls der weiteren Zusatzstoffe dispergiert. Zur Einstellung des zweckmäßigen Bindemittel-Pigment-Verhältnisses können diese der Mischung entweder in festem Zustand oder in Form von 20- bis 60-prozentigen Lösungen zugegeben werden.

Die Magnetdispersion wird nun mit Hilfe üblicher Beschichtunsmaschinen, z. B. mittels eines Linealgießers, auf den nichtmagnetisierbaren Träger aufgetragen. Als nichtmagnetische und nichtmagnetisierbare Träger lassen sich die üblichen Trägermaterialien verwenden, insbesondere Folien aus linearen Polyestern, wie Polymethylenterephthalat, im allgemeinen in Stärken von 4 bis 200 µm und insbesondere von 6 bis 36 µm. Bevor die noch flüssige Beschichtungsmischung auf dem Träger getrocknet wird, was zweckmäßigerweise bei Temperaturen von 50 bis 90° C während 2 bis 5 Minuten geschieht, werden die anisotropen Magnetteilchen durch die Einwirkung eines Magnetfeldes entlang der vorgesehenen Aufzeichnungsrichtung orientiert. Anschließend können die Magnetschichten auf üblichen Maschinen durch Hindurchführen zwischen geheizten und polierten Walzen, gegebenenfalls bei Anwendung von Druck und Temperatur von 50 bis 100° C, vorzugsweise 60 bis 80° C, geglättet und verdichtet werden. Die Dicke der Magnetschicht beträgt im allgemeinen 3 bis 20 µm, vorzugsweise 6 bis 15 µm.

Die erfindungsgemäßen magnetischen Aufzeichnungsträger zeichnen sich durch eine ausgeprägte Homogenität und durch eine besondere glatte Oberfläche der Magnetschichten aus. Dies wird durch die überraschende und vielfältige Wirkung des N-Vinylpyrrolidon-Polymer-Zusatzes verursacht. So verbessert sich durch den Zusatz die Stabilität der Dispersion des magnetischen Materials in der Bindemittellösung bei Lagerung sowohl hinsichtlich einer verminderten Agglomeration der Teilchen als auch bezüglich der Verringerung der thixotropen Eigenschaften der Dispersion, wodurch wieder Gießfähigkeit und Verlauf der flüssigen Dispersionsschicht beim Auftrag auf das Trägermaterial günstig beeinflußt werden. Als Folge aller dieser Einflüsse ergeben sich die obengenannten Vorteile bei den erfindungsgemäßen Aufzeichnungsträger, welche sich dann gegenüber solchen nach dem Stand der Technik durch eine Verringerung der Fehlstellen in der Magnetschicht und eine Herabsetzung der Fehlerzahlen auszeichnen. Eigenschaften, die sich vor allem bei der Datenaufzeichnung, insbesondere aber bei der Videoaufzeichnung vorteilhaft bemerkbar machen.

Die Erfindung sei anhand folgender Beispiele im Vergleich zu Versuchen nach dem Stand der Technik erläutert. Die in den Beispielen und Vergleichsversuchen genannten Teile und Prozente beziehen sich, soweit nicht anderes angegeben ist, auf das Gewicht.

3

0 075 204

## Beispiel 1

640 Teile einer 12,5%igen Lösung eines thermoplastischen Polyesterurethans aus Adipinsäure, Butandiol-1,4 und 4,4'-Diisocyanatodiphenylmethan in einem Gemisch aus gleichen Teilen Tetrahydrofuran und Dioxan sowie 100 Teile einer 20%igen Lösung eines Phenosyharzes aus Bisphennol A und Epichlorhydrin im gleichen Lösungsmittelgemisch werden mit 900 Teilen Chromdioxid sowie 22,5 Teilen Zinkoleat und weiteren 660 Teilen des genannten Lösungsmittelgemisches in einer 6000 Volumenteile fassenden und mit 8000 Teilen Stahlkugeln auf einem Durchmesser von 4 bis 6 mm 4 Tage lang dispergiert. Anschließend werden nochmals 640 Teile der genannten Polyesterurthan-Lösung und 100 Teile der Phenoxyharz-Lösung zugesetzt, zusammen mit weiteren 400 Teilen des Lösungsmittelgemisches, 18 Teilen Butylstearat und 4,5 Teilen Stearinsäure. Nach weiteren 24 Stunden Dispergierung werden 45 Teile einer 20%igen Lösung eines Copolymeren aus 60 Molprozent N-Vinylpyrrolidon und 40 Molprozent Vinylacetat auf einem Molgewicht von 20 000 im genannten Lösungsmittelgemisch der Dispersion zugesetzt und zur gleichmäßigen Verteilung des Copolymeren in der Dispersion nochmals 24 Stunden gekugelt.

Anschließend wird die Dispersion filtriert und auf einer üblichen Beschichtungsmaschine mittels eines Linealgießers in einer solchen Dicke auf eine 14,5 µm dicke Polyethylenterephthalat-Folie aufgebracht, daß sich nach dem Trocknen und Kalandrieren eine Magnetschichtstärke von 5 µm ergibt. Unmittelbar nach dem Auftragen der flüssigen Dispersion wird durch ein Magnetfeld eine magnetische Vorzugsrichtung längs der Aufzeichnungsrichtung erzeugt. Die beschichtete Folie wird schließlich in 1/2 Zoll breite Bänder geschnitten. Diese Bänder werden dann zur Prüfung der Fehlerzahlen, d. h. Signaleinbrüche um mindestens 20 dB auf einem handelsüblichen VHS-Videorecorder geprüft. Die Ergebnisse sind in der Tabelle aufgeführt.

## Beispiel 2

Es wird wie in Beispiel 1 beschrieben verfahren, jedoch werden der Dispersion 135 Teile der Lösung des N-Vinylpyrrolidon-Copolymeren zugesetzt, dies entspricht einem Anteil von 3%, bezogen auf die Menge an magnetischem Material. Die bei der Prüfung bestimmte Fehlerzahl ist in der Tabelle angegeben.

## Beispiel 3

Es wird wie in Beispiel 1 beschrieben verfahren, jedoch werden der Dispersion 225 Teile der Lösung des N-Vinylpyrrolidon-Copolymeren zugesetzt, dies entspricht einem Anteil von 5%, bezogen auf die Menge an magnetischem Material. Die bei der Prüfung bestimmte Fehlerzahl ist in der Tabelle angegeben.

## Vergleichsversuch 1

Es wird wie in Beispiel 1 beschrieben verfahren, jedoch ohne Zugabe eines N-Vinylpyrrolidon-Copolymeren. Die bei der Prüfung bestimmte Fehlerzahl ist in der Tabelle angegeben.

Tabelle

|  | Zusatz an N-Vinylpyrrolidon-Copolymeren | Fehlerzahl |
|---|---|---|
| Beispiel 1 | 1% | 42 |
| Beispiel 2 | 3% | 38 |
| Beispiel 3 | 5% | 33 |
| Vergleichsversuch 1 | — | 140 |

4

### Beispiel 4

Es wird wie in Beispiel beschrieben verfahren, jedoch wird anstelle des Chromdioxids ein kobaltmodifiziertes Eisenoxid verwendet und der Dispersion zum Schluß 225 Teile einer 20%igen Lösung eines Copolymeren aus 60 Molprozent N-Vinylpyrrolidon und 40 Molprozent Vinylacetat mit einem Molgewicht von 5000 zugesetzt. Bei der Bestimmung der Oberflächenrauhigkeit der resultierenden Magnetschicht wurde ein Rz-Wert von 0,14 µm gemessen.

### Vergleichsversuch 2

Es wird wie in Beispiel 4 beschrieben verfahren, jedoch ohne Zusatz des N-Vinylpyrrolidon-Copolymeren. Der Rz-Wert beträgt 0,23µm.

### Beispiel 5

In einer Rührwerkskugelmühle werden

| | |
|---|---|
| 38,4 Teile | $\gamma$—Fe$_2$O$_3$, |
| 6,5 Teile | eines acrylatmodifizierten Polyurethans, bestehend aus 0,18 Teile eines Adipinsäureesters, 0,79 Teile Neopenthylglykol, 0,03 Teile Trimethylolpropan, 0,8 Teile eines Epoxydacrylats, 159, Teile Diphenylmethandiisocyanat mit einem Molgewicht von 20 000 als 50%ige Lösung in Cyclohexanon, |
| 3,5 Teile | eines Umsetzungsproduktes einer Dimerfettsäure mit einem Polyamin, als Dispergierhilfsmittel, |
| 29,6 Teile | Cyclohexanon, |
| 25,7 Teile | Toluol und |
| 0,96 Teile | eine Copolymere aus 60 Molprozent N-Vinylpyrrolidon und 40 Molprozent Vinylacetat und einem Molgewicht von 20 000 |

gemischt und eine Stunde dispergiert. Anschließend werden der Dispersion

| | |
|---|---|
| 28,2 Teile | des obenerwähnten Polyurethanlackes als 50%ige Lösung in Cyclohexanon |
| 1,9 Teile | Tetraethylenglykoldiacrylat |
| 19,6 Teile | Cyclohexanon |
| 25,4 Teile | Toluol |
| 27,0 Teile | $\gamma$-Butyrolacton |

zugefügt und nochmals eine halbe Stunde dispergiert. Die Dispersion wird dann filtriert und nach dem Spincoating-Verfahren auf 75 µm starke Polyesterscheiben aufgetragen. Die nach dem Trocknen resultierende Schichtdicke beträgt 1,8 µm.

Bei der Prüfung der Magnetschichtoberfläche unter dem Mikroskop konnten keine Oberflächendefekte festgestellt werden.

### Vergleichsversuch 3

Es wird wie in Beispiel 5 beschrieben verfahren, jedoch ohne Zusatz eines N-Vinylpyrrolidon-Copolymeren. Bei der mikroskopischen Prüfung der Magnetschicht-Oberfläche wurden 2 bis 5 Oberflächendefekte je cm$^2$ gefunden.

**Patentansprüche**

1. Magnetische Aufzeichnungsträger, bestehend aus einem nichtmagnetischen Trägermaterial und mindestens einer darauf haftfest aufgebrachten Magnetschicht auf der Basis eines in einem organischen polymeren Bindemittel und üblichen Zusatzstoffen feinverteilten anisotropen magnetischen Materials, dadurch gekennzeichnet, daß die Magnetschicht zusätzlich 0,5 bis 20 Gew.-%, bezogen auf die Menge an magnetischem Material, eines Homo- oder Copolymeren des N-Vinylpyrrolidons mit einem Molekulargewicht von unter 60 000 enthält.

2. Magnetischer Aufzeichnungsträger gemäß Anspruch 1, dadurch gekennzeichnet, daß das zusätzlich in der Magnetschicht enthaltene N-Vinylpyrrolidon-Polymere aus 0 bis 50 Gewichtsprozent Vinylacetat, Vinylpropionat oder Acrylsäure und 50 bis 100 Gewichtsprozent aus N-Vinylpyrrolidon besteht.

**Claims**

1. A magnetic recording medium comprising a non-magnetic base and, applied thereto, at least one firmly adhering magnetic layer which is based on an anisotropic magnetic material finely dispersed in an organic polymeric binder and conventional additives, wherein the magnetic layer additionsally contains from 0.5 to 20% by weihgt, based on the amount of magnetic material, of an N-vinylpyrrolidone homopolymer or copolymer having a molecular weight of less than 60 000.

2. A magnetic recording medium as claimed in claim 1, wherein the N-vinylpyrrolidone polymer additionally present in the magnetic layer consists of 0 to 50 per cent by weight of vinyl acetate, vinyl propionate or acrylic acid, and 50 to 100 per cent by weight of N-vinylpyrrolidone.

**Revendications**

1. Support d'enregistrement magnétique, constitué d'un matériau support non magnétique et d'au moins une couche magnétique, appliquée dessus de façon solidement adhérente, et à base d'un matériau magnétique, anisotrope, finement réparti dans un liant polymère organique et additifs usuels, caractérisé par le fait que la couche magnétique contient, en outre, 0,5 à 20% en poids, rapporté à la quantité de matériau magnétique, d'un homoou copolymère de N-vinylpyrrolidone d'un poids moléculaire inférieur à 60 000.

2. Support d'enregistrement magnétique selon la revendication 1, caractérisé par le fait que le polymère de N-vinylpyrrolidone contenu dans la couche magnétique est constitué de 0 à 50% en poids d'acétate de vinyle, de propionate de vinyle ou d'acide acrylique et de 50 à 100% en poids de N-venylpyrrolidone.